# EUROPEAN PATENT SPECIFICATION

(11) **EP 2 971 657 B1**
(45) Date of publication and mention of the grant of the patent: **04.08.2021**
(21) Application number: 14808069.0
(22) Date of filing: 11.03.2014
(51) Int. Cl.: F02C 7/042, F01D 17/14, F02K 1/06

(54) **EXPANDING SHELL FLOW CONTROL DEVICE**
STROMUNGSSTEUERUNGSVORRICHTUNG MIT EXPANDIERENDEM MANTEL
DISPOSITIF DE COMMANDE D'ÉCOULEMENT À COQUE EXPANSIBLE

(30) Priority: 12.03.2013 US 201361777306 P
(43) Date of publication of application: 20.01.2016
(73) Proprietor: Raytheon Technologies Corporation, Farmington, CT 06032 (US)
(72) Inventor: IZQUIERDO, Felix, Boynton Beach, Florida 33436 (US); MCALICE, Timothy J., Jupiter, Florida 33458 (US)
(74) Representative: Dehns
(86) International application number: PCT/US2014/022924
(87) International publication number: WO 2014/197030

(56) References cited:
- EP-A2- 0 715 067
- EP-A2- 2 518 275
- WO-A1-2008/045055
- WO-A1-2008/045062
- WO-A1-2011/038213
- US-A- 4 043 121
- US-A- 4 080 785
- US-A- 4 085 583
- US-A- 5 261 227
- US-A1- 2006 213 180
- US-A1- 2010 008 764
- US-A1- 2010 107 650
- US-A1- 2013 047 579

## Description

### BACKGROUND OF THE INVENTION

This disclosure relates to an expanding shell bypass flow control device for a gas turbine engine.

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Gas turbine engines typically include a bypass air stream that flows adjacent to a core engine section and exits the engine downstream of a fan through a nozzle. Bypass air can be used for cooling purposes or to provide additional thrust to the engine. The bypass air stream can be controlled by the nozzle, for example by altering the size or geometry of the area available for the bypass air to flow through. Certain states during a normal engine cycle can correspond to optimal aerodynamic flow characteristic of the bypass stream. Aerodynamic control of the bypass air stream can improve overall operability and efficiency of the gas turbine engine.

US 4,080,785 discloses a prior art modulating bypass variable cycle turbofan engine.

WO 2008/045055 A1 discloses a prior art turbofan engine having fixed structure including ducted passages.

WO 2011/038213 A1 discloses a prior art convertible fan engine.

US 4,085,583 discloses a prior art method for selectively switching motive fluid supply to an aft turbine of a multicycle engine.

EP 0 715 067 A2 discloses a prior art engine exhaust nozzle seal.

### SUMMARY OF THE INVENTION

According to a first aspect of the present invention, there is provided a gas turbine engine as set forth in claim 1.

In an embodiment, the gas turbine engine further includes a seal upstream from the flow control device.

In another embodiment according to any of the previous embodiments, the seal seals a cavity between the flow control device and a static engine structure upstream from the flow control device.

In another embodiment according to any of the previous embodiments, the plurality of arucate segments are metallic sheets.

According to a further aspect of the present invention, there is provided a method as set forth in claim 5.

In an embodiment, the method of controlling bypass flow additionally comprises the step of actuating a seal, where the seal is arranged upstream from the flow control device.

These and other features can be best understood from the following specification and drawings, the following of which is a brief description.

### BRIEF DESCRIPTION OF THE DRAWINGS

Figure 1a illustrates a schematic gas turbine engine.
Figure 1b illustrates a schematic detail view of the bypass flows of Figure 1a.
Figure 2a illustrates a schematic bypass flow control device in the open position.
Figure 2b is a detail view of the schematic bypass flow control device of Figure 2a.
Figure 3a illustrates a schematic bypass flow control device in the closed position.
Figure 3b is a detail view of the schematic bypass flow control device of Figure 3a.
Figure 4 illustrates a side view of the schematic flow control device.
Figure 5a illustrates a front view of the schematic bypass flow control device in the open position.
Figure 5b illustrates a front view of the schematic bypass flow control device in the closed position.

### DETAILED DESCRIPTION

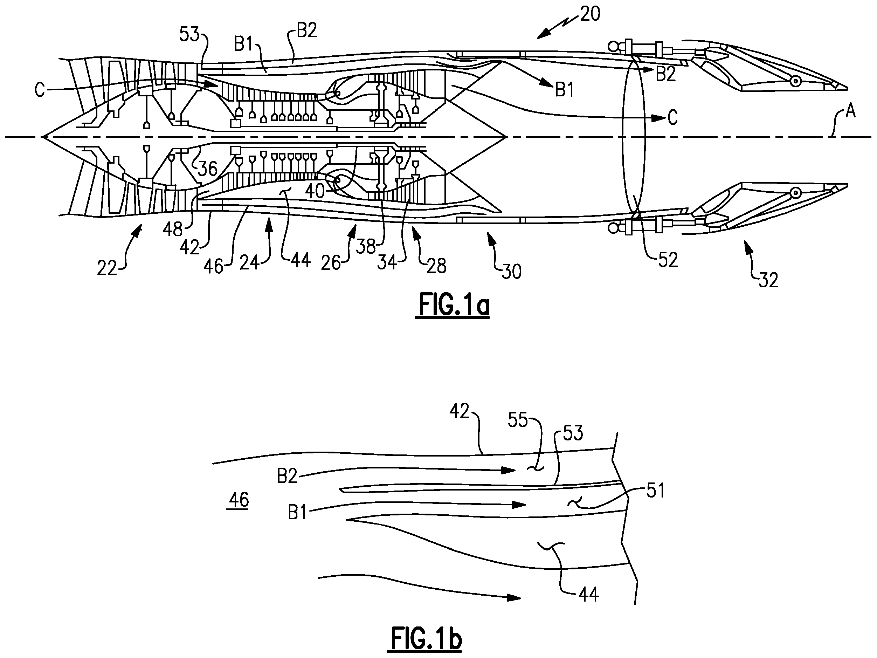

Figure 1a schematically illustrates a gas turbine engine 20. The gas turbine engine 20 generally incorporates a fan section 22, a compressor section 24, a combustor section 26, a turbine section 28, an augmenter section 30 and a nozzle section 32. The sections are defined along a central longitudinal engine axis A. Although depicted as an augmented low bypass gas turbine engine in the disclosed non-limiting embodiment, it should be understood that the concepts described herein are applicable to other gas turbine engines including geared architecture engines, direct drive turbofans, turboshaft engines and others.

The compressor section 24, the combustor section 26 and the turbine section 28 are generally referred to as the engine core. The fan section 22 and a low pressure turbine 34 of the turbine section 28 are coupled by a first shaft 36 to define a low spool. The compressor section 24 and a high pressure turbine 38 of the turbine section 28 are coupled by a second shaft 40 to define a high spool.

An outer engine case structure 42 and an inner engine structure 44 define a generally annular secondary flow path 46 around a core flow path 48 of the engine core. It should be understood that various structure within the engine may define the outer engine case structure 42 and the inner engine structure 44 which essentially define an exoskeleton to support the core engine therein.

Air which enters the fan section 22 is divided between the core air flow C through the core flow path 48 and a bypass air flow B through the secondary flow path 46. The core flow C passes through the combustor section 26, the turbine section 28, then the augmentor section 30 where fuel may be selectively injected and burned to generate additional thrust through the nozzle section 32. The bypass flow B may be utilized for a multiple of purposes to include, for example, cooling and pressurization, or to provide additional thrust. The bypass flow B passes through an annulus defined by the outer engine case structure 42 and the inner engine structure 44 then may be at least partially injected into the core flow C adjacent the nozzle section 32.

As is shown in Figure 1b, in one example, the bypass flow B can further be separated into one or more bypass flow streams. For example, bypass air B can comprise bypass stream B1 and bypass stream B2 separated by a divider 53. Both bypass streams B1 and B2 flow through the annular secondary flowpath 46 between the inner engine structure 44 and the outer engine case structure 42. Bypass stream B1 flows adjacent to the inner engine structure 44 through bypass flowpath 51 while bypass stream B2 flows radially outward from bypass stream B1 through bypass flowpath 55 and adjacent to the outer engine case structure 42.

In one example, the flow control device 52 is a shell that can be arranged around the nozzle section 32 within the outer engine case structure 42. The nozzle 32 is a convergent/divergent nozzle, for example. The flow control device 52 can alter the aerodynamic properties of the bypass flow stream B2 by altering the annular area of bypass flowpath 55 available for bypass flow B2 to pass through. For example, the flow control device 52 can provide more or less bypass flow B2 during certain stages of an engine cycle to improve operability and efficiency of the engine 20.

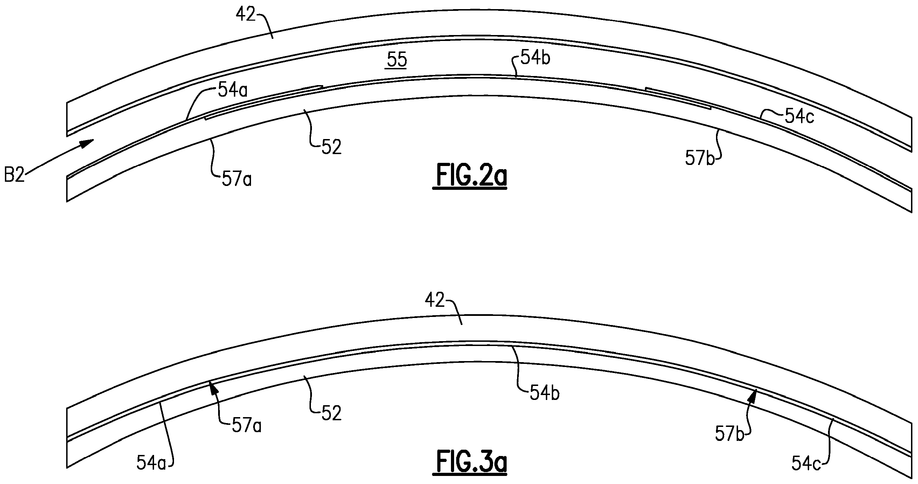

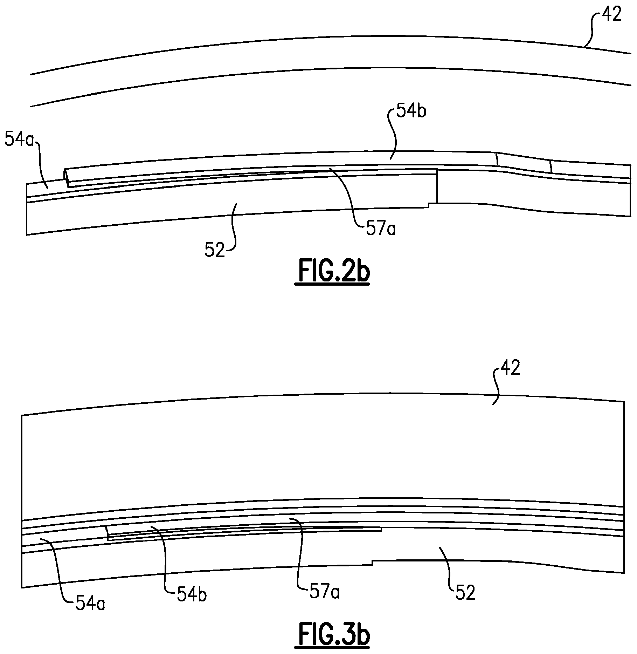

Figures 2a and 2b schematically illustrates the flow control device 52 in the open position. Figure 2b shows a detail view of the flow control device 52 of Figure 2a. The flow control device 52 comprises a plurality of segments 54a, 54b, 54c slidable relative to one another and arranged in a ring. The segments 54a, 54b, 54c can overlap one another, forming sliding joints 57a, 57b. The amount of overlap between the segments 54a, 54b, 54c determines the radius of the flow control device 52 and thus the size of the bypass flowpath 55 through which bypass air B2 can flow. For example, when the flow control device 52 is in the open position, the amount of overlap between segments is increased, and the flow control device 52 contracts. The bypass flowpath 55 allows bypass air B2 through when the flow control device 52 is in the open position. The segments 54a, 54b, 54c can be made of sheet metal, in one example.

Figures 3a and 3b schematically illustrate the flow control device 52 in the closed position. Figure 3b shows a detail view of the flow control device 52 of Figure 3a. In the closed position, the amount of overlap between the segments 54a, 54b, 54c is decreased and the flow control device 52 expands radially outward towards the outer engine case structure 42. In the closed position, the bypass flowpath 55 is blocked off and no bypass air B2 can pass through.

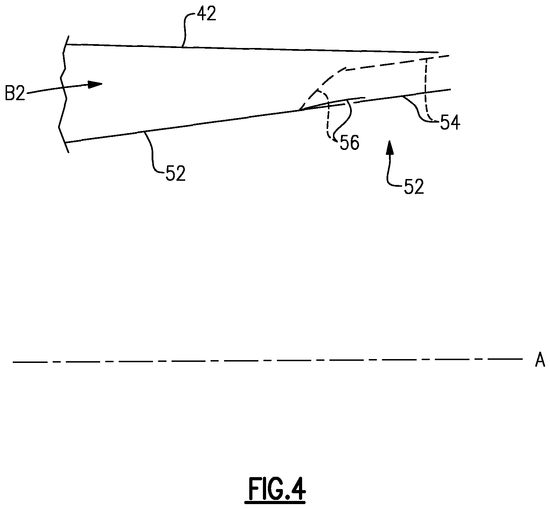

Referring to Figure 4, a seal 56 can be present upstream of the segments 54 of the flow control device 52. The seal 56 can be a flex seal, for example. The seal 56 can seal a cavity between the flow control device 52 and static ducting structures upstream from the nozzle 32. The segment 54 and seal 56 are shown in the open position by the solid lines and in the closed position by the dashed lines.

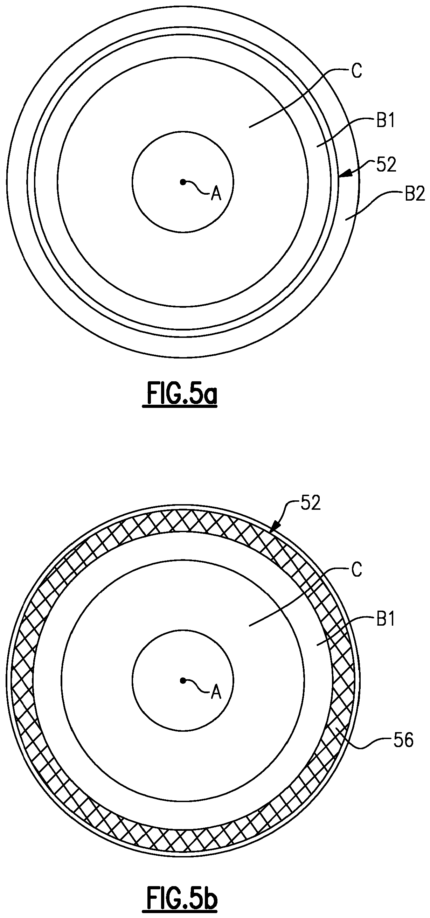

Figures 5a and 5b schematically illustrate a front view of the flow control device 52 in the open and closed positions, respectively.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20), comprising:
an outer engine case structure (42);
a core engine arranged within the outer engine case structure (42);
a nozzle (32) downstream from the core engine;
a flow control device (52) arranged around the nozzle (32) and radially inward from the outer engine case structure (42), the flow control device (52) comprising a plurality of arcuate segments (54a, 54b, 54c), wherein the plurality of arcuate segments (54a, 54b, 54c) are movable radially to vary a bypass flow area by overlap of the plurality of arcuate segments (54a, 54b, 54c);
a first bypass flow path (51) about the core engine; and
a second bypass flow path (55) disposed radially outward of the first bypass flow path (51), wherein a divider (53) separates a first bypass stream (B1) and a second bypass stream (B2), the first bypass stream (B1) flows adjacent to the core engine through the first bypass flow path (51) and the second bypass stream flows adjacent to the outer engine case structure (42) through the second bypass flow path (55), the flow control device (52) is in the second bypass flow path (55), the plurality of arcuate segments (54a, 54b, 54c) are slidable with respect to one another to vary an amount of overlap between the segments (54a, 54b, 54c), such that increasing the amount of overlap between the arcuate segments (54a, 54b, 54c) decreases a diameter of the flow control device (52), and decreasing the amount of overlap between the arcuate segments (54a, 54b, 54c) increases a diameter of the flow control device (52).

2. The gas turbine engine (20) of claim 1, further comprising a seal (56) upstream from the flow control device (52).

3. The gas turbine engine (20) of claim 2, wherein the seal (56) seals a cavity between the flow control device (52) and a static engine structure upstream from the flow control device (52).

4. The gas turbine engine (20) of any preceding claim, wherein the plurality of arcuate segments (54a, 54b, 54c) are metallic sheets.

5. A method of controlling bypass flow in a gas turbine engine (20) according to claim 1, the method comprising the steps of:
providing the flow control device (52) arranged around the nozzle (32) and radially inward from the outer engine case structure (42), the flow control device (52) comprising the plurality of arcuate segments (54a, 54b, 54c) configured to overlap one another and defining a bypass flow path;
sliding the plurality of arcuate segments (54a, 54b, 54c) to change the bypass flow area by overlap of the plurality of arcuate segments (54a, 54b, 54c).

6. The method of claim 5, additionally comprising the step of actuating a seal (56), the seal (56) arranged upstream from the flow control device (52).

## Patentansprüche

1. Gasturbinentriebwerk (20), umfassend:
eine äußere Triebwerksgehäusestruktur (42);
ein Kerntriebwerk, das innerhalb der äußeren Triebwerksgehäusestruktur (42) angeordnet ist;
eine Düse (32) stromabwärts vom Kerntriebwerk;
eine Durchflusssteuerungsvorrichtung (52), die um die Düse (32) und radial einwärts der äußeren Triebwerksgehäusestruktur (42) angeordnet ist, wobei die Durchflusssteuerungsvorrichtung (52) eine Vielzahl von bogenförmigen Segmenten (54a, 54b, 54c) umfasst, wobei die Vielzahl von bogenförmigen Segmenten (54a, 54b, 54c) radial beweglich sind, um eine Nebenstromfläche durch Überlappung der Vielzahl von bogenförmigen Segmenten (54a, 54b, 54c) zu variieren;
einen ersten Nebenstromweg (51) um ein Kerntriebwerk; und
einen zweiten Nebenstromweg (55), der radial auswärts des ersten Nebenstromwegs (51) angeordnet ist, wobei ein Teiler (53) einen ersten Nebenstrahl (B1) und einen zweiten Nebenstrahl (B2) trennt, wobei der erste Nebenstrahl (B1) angrenzend an das Kerntriebwerk durch den ersten Nebenstromweg (51) strömt und der zweite Nebenstrahl angrenzend an die äußere Triebwerksgehäusestruktur (42) durch den zweiten Nebenstromweg (55) strömt, wobei die Durchflusssteuerungsvorrichtung (52) in dem zweiten Nebenstromweg (55) vorliegt, die Vielzahl von bogenförmigen Segmenten (54a, 54b, 54c) in Bezug aufeinander verschieblich sind, um ein Maß der Überlappung zwischen den Segmenten (54a, 54b, 54c) zu variieren, so dass ein Erhöhen des Maßes der Überlappung zwischen den bogenförmigen Segmenten (54a, 54b, 54c) einen Durchmesser der Durchflusssteuerungsvorrichtung (52) verringert und ein Verringern des Maßes der Überlappung zwischen den bogenförmigen Segmenten (54a, 54b, 54c) einen Durchmesser der Durchflusssteuerungsvorrichtung (52) vergrößert.

2. Gasturbinentriebwerk (20) nach Anspruch 1, ferner eine Dichtung (56) stromaufwärts von der Durchflusssteuerungsvorrichtung (52) umfassend.

3. Gasturbinentriebwerk (20) nach Anspruch 2, wobei die Dichtung (56) einen Hohlraum zwischen der Durchflusssteuerungsvorrichtung (52) und einer statischen Triebwerksstruktur stromaufwärts von der Durchflusssteuerungsvorrichtung (52) abdichtet.

4. Gasturbinentriebwerk (20) nach einem der vorstehenden Ansprüche, wobei die Vielzahl von bogenförmigen Segmenten (54a, 54b, 54c) Metallbleche sind.

5. Verfahren zum Steuern eines Nebenstroms in einem Gasturbinentriebwerk (20) nach Anspruch 1, wobei das Verfahren die folgenden Schritte umfasst:
Bereitstellen der Durchflusssteuerungsvorrichtung (52), die um die Düse (32) und radial einwärts der äußeren Triebwerksgehäusestruktur (42) angeordnet ist, wobei die Durchflusssteuerungsvorrichtung (52) die Vielzahl von bogenförmigen Segmenten (54a, 54b, 54c) umfasst, die so konfiguriert sind, dass sie einander überlappen und einen Nebenstromweg definieren;
Verschieben der Vielzahl von bogenförmigen Segmenten (54a, 54b, 54c), um die Nebenstromfläche durch Überlappen der Vielzahl von bogenförmigen Segmenten (54a, 54b, 54c) zu verändern.

6. Verfahren nach Anspruch 5, zusätzlich den Schritt des Betätigens einer Dichtung (56) umfassend, wobei die Dichtung (56) stromaufwärts von der Durchflusssteuerungsvorrichtung (52) angeordnet ist.

## Revendications

1. Moteur à turbine à gaz (20), comprenant :
une structure de carter de moteur externe (42) ;
un moteur central agencé à l'intérieur de la structure de carter de moteur externe (42) ;
une buse (32) en aval du moteur central ;
un dispositif de commande d'écoulement (52) agencé autour de la buse (32) et radialement vers l'intérieur depuis la structure de carter de moteur externe (42), le dispositif de commande d'écoulement (52) comprenant une pluralité de segments arqués (54a, 54b, 54c), dans lequel la pluralité de segments arqués (54a, 54b, 54c) sont mobiles radialement pour faire varier une zone d'écoulement de dérivation par chevauchement de la pluralité de segments arqués (54a, 54b, 54c) ;
un premier chemin d'écoulement de dérivation (51) autour du moteur central ; et
un second chemin d'écoulement de dérivation (55) disposé radialement vers l'extérieur du premier chemin d'écoulement de dérivation (51), dans lequel un diviseur (53) sépare un premier courant de dérivation (B1) et un second courant de dérivation (B2), le premier courant de dérivation (B1) s'écoule de manière adjacente au moteur central à travers le premier chemin d'écoulement de dérivation (51) et le second courant de dérivation s'écoule de manière adjacente à la structure de carter de moteur externe (42) à travers le second chemin d'écoulement de dérivation (55), le dispositif de commande d'écoulement (52) est dans le second chemin d'écoulement de dérivation (55), la pluralité de segments arqués (54a, 54b, 54c) peuvent coulisser les uns par rapport aux autres pour faire varier une quantité de chevauchement entre les segments (54a, 54b, 54c), de sorte que l'augmentation de la quantité de chevauchement entre les segments arqués (54a, 54b, 54c) diminue un diamètre du dispositif de commande d'écoulement (52), et la diminution de la quantité de chevauchement entre les segments arqués (54a, 54b, 54c) augmente un diamètre du dispositif de commande d'écoulement (52).

2. Moteur à turbine à gaz (20) selon la revendication 1, comprenant en outre un joint (56) en amont du dispositif de commande d'écoulement (52).

3. Moteur à turbine à gaz (20) selon la revendication 2, dans lequel le joint (56) scelle une cavité entre le dispositif de commande d'écoulement (52) et une structure de moteur statique en amont du dispositif de commande d'écoulement (52).

4. Moteur à turbine à gaz (20) selon une quelconque revendication précédente, dans lequel la pluralité de segments arqués (54a, 54b, 54c) sont des feuilles métalliques.

5. Procédé de commande d'écoulement de dérivation dans un moteur à turbine à gaz (20) selon la revendication 1, le procédé comprenant les étapes :
de fourniture du dispositif de commande d'écoulement (52) agencé autour de la buse (32) et radialement vers l'intérieur depuis la structure de carter de moteur externe (42), le dispositif de commande d'écoulement (52) comprenant la pluralité de segments arqués (54a, 54b, 54c) conçus pour se chevaucher les uns les autres et définissant un chemin d'écoulement de dérivation ;
de coulissement de la pluralité de segments arqués (54a, 54b, 54c) pour modifier la zone d'écoulement de dérivation par chevauchement de la pluralité de segments arqués (54a, 54b, 54c) .

6. Procédé selon la revendication 5, comprenant en outre l'étape d'actionnement d'un joint (56), le joint (56) étant agencé en amont du dispositif de commande d'écoulement (52).
